# EUROPÄISCHE PATENTSCHRIFT

(11) **EP 3 204 738 B1**
(45) Veröffentlichungstag und Bekanntmachung des Hinweises auf die Patenterteilung: **29.04.2020**
(21) Anmeldenummer: 15797588.9
(22) Anmeldetag: 07.10.2015
(51) Int. Cl.: G01J 3/02, G01J 3/36, G02B 5/28, G01J 3/26, G01J 3/28

(54) **OPTISCHES FILTERELEMENT FÜR EINRICHTUNGEN ZUR UMWANDLUNG VON SPEKTRALEN INFORMATIONEN IN ORTSINFORMATIONEN**
OPTICAL FILTER ELEMENT FOR DEVICES FOR CONVERTING SPECTRAL INFORMATION INTO LOCATION INFORMATION
ÉLÉMENT DE FILTRAGE OPTIQUE POUR MOYENS DE CONVERSION D'INFORMATIONS SPECTRALES EN INFORMATIONS DE POSITION

(30) Priorität: 07.10.2014 DE 102014014983
(43) Veröffentlichungstag der Anmeldung: 16.08.2017
(73) Patentinhaber: SENORICS GmbH, 01062 Dresden (DE)
(72) Erfinder: LANGNER, Maik, 01159 Dresden (DE); FRÖB, Hartmut, 01768 Glashütte (DE); LYSSENKO, Vadim, G., 01069 Dresden (DE); SUDZIUS, Markas, 01069 Dresden (DE); LEO, Karl, 01219 Dresden (DE)
(74) Vertreter: Kailuweit & Uhlemann Patentanwälte Partnerschaft mbB
(86) Internationale Anmeldenummer: PCT/DE2015/000504
(87) Internationale Veröffentlichungsnummer: WO 2016/055048

(56) Entgegenhaltungen:
- US-A1- 2007 146 888
- ARVIN EMADI ET AL: "Linear variable optical filter-based ultraviolet microspectrometer", APPLIED OPTICS, OPTICAL SOCIETY OF AMERICA, WASHINGTON, DC; US, Bd. 51, Nr. 19, 1. Juli 2012 (2012-07-01), Seiten 4308-4315, XP001576957, ISSN: 0003-6935, DOI: 10.1364/AO.51.004308 [gefunden am 2012-06-22]

## Beschreibung

Die Erfindung betrifft ein optisches Filterelement für Einrichtungen zur Umwandlung von spektralen Informationen in Ortsinformationen mit einem zugeschalteten Detektor zur Erfassung von Signalen, wobei Licht, das ganzflächig auf das Filterelement trifft, nach dem Durchgang durch das Filterelement über dessen räumliche Ausdehnung in die einzelnen spektralen Komponenten aufgetrennt wird,
zumindest umfassend zwei Mikroresonatoren,
wobei beide Mikroresonatoren zumindest aufweisen
- mindestens zwei flächendeckende reflektierende Schichtstrukturen zumindest aus einer Materialschicht mit hohem Brechungsindex und zumindest aus einer Materialschicht mit niedrigem Brechungsindex in abwechselnder Folge sowie
- mindestens eine flächendeckende Resonanzschicht, die zwischen den jeweils beiden flächendeckenden reflektierenden Schichtstrukturen angeordnet ist.

Für die spektrale Analyse von optischen Signalen ist eine Auftrennung in einzelne Wellenlängen notwendig, die anschließend zur Auswertung über Signalwandler in einen elektrisch verwertbaren Datenstrom umgewandelt werden. Dies geschieht durch eine Umwandlung der spektralen Information in eine Ortsinformation. Bisher werden zu diesem Zweck diffraktive/refraktive Elemente (optische Gitter, Prismen) eingesetzt, die für eine hohe spektrale Auflösung (d.h. genügend weite Aufspaltung des eingestrahlten Lichtes) eine ausreichende geometrische Ausdehnung besitzen müssen. Zusätzlich muss die wechselseitige Ausrichtung der optischen Elemente thermisch und mechanisch stabil genug sein, um systematische Fehler bei der Messung zu vermeiden. Damit sind bisherige Spektrometer nicht für alle Einsatzorte geeignet, bzw. sind die Kosten für den Einsatzzweck zu hoch.

Die technische Entwicklung von Spektrometern hat in den vergangenen Jahren zu einer Miniaturisierung sowie Kostenreduktion geführt. Aktuelle Geräte passen auf eine Handfläche (z. B.: USB Spektrometer) und erreichen dennoch eine ausreichende Auflösung (≈ 1 nm FWHM) und ein akzeptables Signal-Rauschverhältnis (1:1000). Dabei hat sich das Grundprinzip der Messung nicht wesentlich verändert. Über eine Optik (z. B.: Linsensystem, Lichtfaser) und einen Eintrittsspalt wird das Eingangssignal auf ein dispersives Element projiziert. Dabei kommen typischerweise Prismen oder Gitter zum Einsatz. Das vom dispersiven Element spektral aufgetrennte Signal wird anschließend auf einen Detektor gelenkt, dessen Signale anschließend weiterverarbeitet werden können. Damit das aufgetrennte Signal von den einzelnen Elementen des Detektors aufgelöst werden kann, besitzt der Signalweg eine vom Ablenkungswinkel des dispersiven Elementes abhängige Länge. Die Länge lässt sich nicht beliebig verkürzen, wodurch Spektrometer auf dieser Basis eine Mindestausdehnung besitzen.

Eine alternative Umsetzung eines Spektrometers beinhaltet die Verwendung eines Bandpassfilters mit lokal variabler Filtercharakteristik zusammen mit einer Detektoreinheit. Die in der Druckschrift US 6 057 925 A unter dem Begriff LVF "Linear variable filter" beschriebenen Filterelemente basieren auf Interferenzeffekten und bestehen typischerweise aus einem Schichtsystem metallischer und/oder dielektrischer dünner Schichten, die technisch derart auf ein Substrat aufgebracht sind, dass die Schichtdicken und damit die Transmissionseigenschaften über eine Richtung variieren. Die einzelnen Komponenten des Eingangssignals werden somit ortsabhängig unterschiedlich stark abgeschwächt. Über eine vorherige Kalibrierung kann aus der Position der aktiven Detektorelemente die spektrale Information erhalten werden. Durch die flache Bauform des Filters sowie des Detektors kann der spektral auflösende und messende Anteil des Bauelementes besonders kompakt und robust ausgeführt werden.
Die Ausnutzung des Interferenzeffektes zur Auftrennung des Lichtes hat aber zur Folge, dass der Filter eine Richtungsabhängigkeit des einfallenden Signals aufweist. Je weiter entfernt der Einfallswinkel vom senkrechten Lichteintritt entfernt ist, umso stärker verschieben sich die spektralen Filtereigenschaften zu kurzen Wellenlängen. Dadurch ist eine eindeutige Korrelation zwischen aktivem Detektorelement und gefilterter Wellenlänge nicht mehr gegeben und die praktisehe spektrale Auflösung verschlechtert sich deutlich gegenüber der theoretisch möglichen (definiert durch Filtercharakteristik und Detektorauflösung). Zur Vermeidung dieses richtungsabhängigen Effektes muss das Eingangssignal vor/während des Durchgangs durch das Bauelement optisch entsprechend angepasst werden, um sich innerhalb eines schmalen Winkelbereiches zu befinden.

In der Druckschrift US 6 785 002 B2 "Variable filter-based optical spectrometer" oder in der Druckschrift US 2004/032584 A "Optical channel monitoring device" wird der prinzipielle Aufbau und die Funktionsweise eines solchen integrierten Systems für den Einsatz im Telekommunikationsbereich unter Aufspaltung gemultiplexter Signale dargelegt. Dabei trifft das aus einer Lichtfaser ausgekoppelte Licht auf ein Linsensystem und wird anschließend kollimiert auf das Filterelement projiziert. Die einzelnen spektralen Komponenten werden anschließend über den dahinterliegenden Sensor erfasst. Für eine hohe Auflösung wird die Verwendung eines Etalons mit dielektrischen Spiegeln für das variable Filterelement vorgeschlagen.

In der Druckschrift US 2003/058447 A1 "Colorimeter apparatus for color printer ink" ist ein Bauelement beschrieben, bei dem die Richtungsselektion über eine Matrix aus Glasfasern oder eine flache Kollimatoranordnung zwischen Detektor und Filter stattfindet. Zur weiteren Erhöhung der Auflösung kann eine zweite Glasfasermatrix bzw. Kollimator auf der Eintrittsseite des Filters verwendet werden.

Als eine weitere Variante für die Richtungsbeschränkung der einfallenden Signale sind an dieser Stelle noch selbstfokussierende Linsenarrays anzuführen, wie sie beispielhaft in der Druckschrift US 2010/092083 A1 "In-line linear variable filter based spectrophotometer" beschrieben sind.

Eine weitere Variante der Spektroskopie mittels linear variabler Filter ist in der Druckschrift US 5 144 498 A "A variable wavelength light filter and sensor system" beschrieben. Dabei wird einfallendes Licht über die Reflexion an bis zu zwei variablen Filtern auf ein optionales drittes Filterelement und anschließend den Detektor abgelenkt. Bei dieser Konfiguration können sich die Filter auch auf den Seitenflächen eines gleichseitigen Prismas befinden.

In Emadi, A., et al.: "Linear variable optical filter-based ultraviolet microspectrometer,". Appl. Opt. 51, 4308-4315 (2012) ist ein linear variabler Filter für den UV-Bereich beschrieben, der vor eine CMOS-Kamera montiert werden kann.

Nachteilig an den genannten Lösungen ist die Tatsache, dass eine teilweise räumlich ausgedehnte Optik oder ein fertigungstechnisch komplex herzustellendes zusätzliches Bauelement notwendig ist, um aus der Kombination von variablem Bandpassfilter und Detektor eine zweckmäßige spektroskopische Information zu erhalten.

In der Druckschrift US 2007/0148760 A1 ist ein Verfahren zur Erfassung von Chemikalien und Biomolekülen beschrieben, das aus folgenden Schritten besteht:
- Erzeugen von Licht aus einer Lichtquelle,
- Einfallen von Licht auf/in einen optischen Sensor, der ein schmales Band von optischen Wellenlängen ausgibt, wenn er mit einem breiten Band von optischen Wellenlängen beleuchtet wird,
- Ausbreiten des Austrittslichts aus dem Sensor zu einem Detektor mit einer Eintrittsfläche, die zumindest/mindestens eine Schicht mit einer lateral veränderlichen Transmissionseigenschaft umfasst, und
- Nutzen der Position des Austrittslichts mittels des Detektors, um die Gegenwart eines Analytikums (Chemikalie oder Biomoleküle) zu erfassen.

Die zugehörige Einrichtung umfasst
- eine Lichtquelle, die ein breites Band von optischen Wellenlängen erzeugt,
- einen optischen Sensor, der ein schmales Band von optischen Wellenlängen ausgibt, wenn er mit einem breiten Band von optischen Wellenlängen aus der Lichtquelle beleuchtet wird,
- einen Detektor, der mindestens eine Schicht mit lateral veränderlichen Transmissionseigenschaften umfasst, während der Detektor Austrittslicht durch den optischen Sensor empfängt, wobei zumindest eine Schicht einen Teil des empfangenen Lichtes auf einer Position der mindestens einen Schicht durchlässt, und der Detektor die Position nutzt, um die Gegenwart des Analytikums zu erfassen.

Des Weiteren wird in der Druckschrift US 2007/0148760 A1 ein Verfahren zum Erhalten von Informationen über ein Analytikum beschrieben, wobei das Verfahren umfasst:
- Erzeugen eines Anreizes eines Analytikums auf einen Analytikum-Wellenlängen-Wandler, in Bezug darauf, dass der Wandler ein Austrittslicht erzeugt, wobei das Austrittslicht eine Analytikum-Information anzeigt,
- Ausbreiten des Austrittslichts zu einer Eintrittsfläche einer Transmissionsstruktur, wobei die Transmissionsstruktur eine Austrittsfläche hat, die einen Satz von zwei oder mehreren Positionen umfasst, wobei die Transmissionsstruktur eine geschichtete Struktur mit einer lateral veränderlichen Energie-Transmissions-Funktion ist, und
- Durchlassen des Austrittslichts durch die Transmissionsstruktur bis zu einer Austrittsfläche, so dass relative Mengen von Photonen einen Satz von Positionen erzeugen, wobei die relativen Mengen Analytikum-Informationen anzeigen.

Die zugehörige Einrichtung umfasst
- einen Analytikum-Wellenlängen-Wandler, der auf einen Analytikum-Anreiz durch Erzeugen eines Austrittslichtes reagiert, der Analytikum-Informationen anzeigt,
- eine Transmissionsstruktur mit einer Eintrittsfläche und einer Austrittsfläche, wobei die Austrittsfläche einen Satz von mindestens zwei Positionen umfasst, wobei die Transmissionsstruktur eine geschichtete Struktur mit einer lateral veränderlichen Energie-Transmissions-Funktion ist, und
- eine Ausbreitungskomponente, die das Austrittslicht aus dem Wandler zur Eintrittsfläche der Transmissionsstruktur richtet, in Bezug auf das Austrittslicht erzeugt die Transmissionsstruktur Photonen auf dem Satz von Positionen der Austrittsfläche derart, so dass die relativen Mengen der Photonen einen Satz von Positionen erzeugen, die Analytikum-Informationen anzeigen.

Ein Nachteil der beiden letztgenannten Lösungen besteht darin, dass das zu analysierende Lichtsignal für eine gute Auflösung vor dem Auftreffen möglichst parallel gerichtet werden muss. Dazu sind zusätzliche optische Komponenten, wie bspw. Linsen oder Lamellen (Blades) notwendig.

Die Druckschrift US 2007/146888 A1 offenbart einen linear variablen Filter mit zwei Reflektoren, die jeweils aus abwechselnd geschichteten, hoch- und niedrigbrechenden Schichten gebildet werden, und zwischen denen sich eine keilförmige Resonanzschicht befindet. Die beschriebene Filterstruktur kann auf einem Photosensor gebildet werden. Nachteilig weist die beschriebene Filterstruktur eine intrinsische Dispersion auf, die zu Problemen bei der Wellenlängenkalibrierung führen kann.

In der Druckschrift US 6,768,097 B1 wird eine optoelektronische Vorrichtung beschrieben, bei der eine Kopplung von zwei Mikroresonatoren, die voneinander beabstandet angeordnet sind, zur Filterung von Wellenlängen eingesetzt wird. Ein erster Mikroresonator besitzt dabei eine vergleichsweise große Ausdehnung (einige 100 µm), wodurch eine Vielzahl von Resonanzen entsteht, bezeichnet als Frequenzkamm. Der zweite Mikroresonator besitzt im Gegensatz zu ersterem eine Ausdehnung in Größenordnung von dessen Resonanzwellenlängen. Zusätzlich ist die Resonanzschicht des zweiten (dünnen) Mikroresonators elektrisch ansteuerbar, um dessen optische Eigenschaften (Dicke, Brechungsindex) zu ändern.
Damit ist es möglich, eine der Resonanzen des Frequenzkammes herauszufiltern.

Der Nachteil besteht einerseits darin, dass der Frequenzkamm des ersten Mikroresonators kein kontinuierliches Spektrum bei der Messung zulässt. Des Weiteren ist eine elektrische Ansteuerung zur Selektion des durch beide Mikroresonatoren durchgelassenen Signals notwendig. Damit ist auch ein weiterer Nachteil ersichtlich, wobei eine Messung eines breiten Spektrums nur in Serie notwendig ist, wodurch die zeitliche Auflösung begrenzt ist.

Der Erfindung liegt die Aufgabe zugrunde, ein optisches Filterelement für Einrichtungen zur Umwandlung von spektralen Informationen in Ortsinformationen anzugeben, das derart geeignet ausgebildet ist, dass dessen Aufbau in Einrichtungen zur Spektroskopie oder zur Spektrometrie platzsparend in Ausrichtung des Lichtsignals und dabei kostengünstig ausgebildet ist.

Die Aufgabe der Erfindung wird mittels der Merkmale des Patentanspruchs 1 gelöst.
Das optische Filterelement für Einrichtungen zur Umwandlung von spektralen Informationen in Ortsinformationen mit einem zugeschalteten Detektor zur Erfassung von Signalen
umfasst zumindest zwei Mikroresonatoren,
wobei beide Mikroresonatoren zumindest aufweisen
- mindestens zwei flächendeckende reflektierende Schichtstrukturen zumindest aus einer Materialschicht mit hohem Brechungsindex und zumindest aus einer Materialschicht mit niedrigem Brechungsindex in abwechselnder Folge sowie
- mindestens eine flächendeckende Resonanzschicht, die zwischen den jeweils beiden flächendeckenden reflektierenden Schichtstrukturen angeordnet ist,
wobei gemäß dem Kennzeichenteil des Patentanspruchs 1 das Filterelement zumindest umfasst ein transparentes, planparalleles Substrat zur optischen Entkopplung der beiden Mikroresonatoren,
wobei sich auf einer ersten der beiden sich gegenüberliegenden Oberflächen des Substrats der erste Mikroresonator befindet,
wobei sich auf dem Substrat auf einer der ersten Oberfläche gegenüberliegenden zweiten Oberfläche des Substrats der zweite Mikroresonator befindet, und
wobei die Resonanzschicht und/oder die jeweils die Resonanzschicht umgebende reflektierende Schichtstruktur eine variable Schichtdicke entlang einer horizontalen Achse des Filterelementes aufweisen.

Die Einrichtungen stellen vorzugsweise spektroskopische/spektrometrische Einrichtungen dar.

Als optisches Filterelement im Sinne der Erfindung werden Strukturen bezeichnet, die beim Einbringen in einen Lichtweg mit den Photonen dergestalt wechselwirken, dass ein messbarer Anteil der Photonen nach Durchgang durch den Filter fehlt. Erfindungsgemäß passiert nur ein spektral schmales Band das Filterelement, während das übrige Spektrum vollständig reflektiert bzw. in der Struktur absorbiert wird.

Als spektrometrische bzw. spektroskopische Anwendungen im Sinne der Erfindungen werden Verfahren und Einrichtungen bezeichnet, bei denen Strahlung zerlegt wird und eine Zuordnung einer spektralen Messgröße (Wellenlänge, Intensität) zu einem auslesbaren Detektorelement gegeben ist.

Umwandlung von spektralen Informationen in Ortsinformationen im Sinne der Erfindung bezeichnet die Wirkungsweise des Filterelements in der Form, dass Licht, das ganzflächig auf den Filter trifft, nach dem Durchgang durch das Filterelement abhängig von dessen Aufbau in die einzelnen spektralen Komponenten über dessen räumliche Ausdehnung aufgetrennt wird.

Als Detektor im Sinne der Erfindung werden optoelektronische Sensoren bezeichnet, bei denen Photonen durch den photoelektrischen Effekt in ein elektrisches Signal umgewandelt wird. Dazu zählen unter anderem Photozellen, Photomultiplier oder CMOS/CCD - Elemente und Photodioden.
Erfindungsgemäß beinhaltet der Detektor eine Reihe von einzelnen Sensorelementen, bspw. ausgeprägt als Zeile oder Matrix. Dabei können die einzelnen Elemente mit voneinander abweichender Form/Größe sowie spektraler Empfindlichkeit ausgestattet sein.

Als Signal im Sinne der Erfindung wird elektromagnetische Strahlung bezeichnet, die sowohl monochromatisch (eine Frequenz/Wellenlänge) oder spektral breitbandig auf den Filter trifft. Dabei kann das Signal eine zeitliche Intensitätsmodulation (Einzelpuls, periodische sowie aperiodische Variation) besitzen, oder mit einer konstanten Intensitätsverteilung auftreten.

Als Mikroresonator im Sinne der Erfindung wird ein Bauelement bezeichnet, das mit elektromagnetischer Strahlung derart wechselwirkt, dass sich stehende Wellen im Inneren ausbilden können (Resonanzschicht). Dazu sind dessen Wände als Begrenzungsflächen (teil-)reflektiv ausgebildet.
Wesentlich ist dabei, dass mindestens eine Raumrichtung eine Ausdehnung in der Größenordnung des zu untersuchenden Spektralbereichs besitzt, bspw. für Licht von einigen 10 nm bis wenigen µm. Für das betrachtete Filterelement ist diese Raumrichtung senkrecht auf der Ausdehnungsfläche der Filme/Oberflächen des Substrats stehend.

Erfindungsgemäß bezeichnet eine flächendeckend ausgeprägte Schichtstruktur eine Abfolge von miteinander verbundenen Materialschichten (z. B.: Metalloxide, Metalle, Polymere, organische Moleküle etc.), die jeweils eine flächige Ausdehnung von wenigen mm² bis mehreren 100cm² und eine Dicke in der Größenordnung weniger 10nm bis einige 100nm besitzen, wobei zwischen jeweils zwei Materialien genau eine Grenzfläche entsteht, deren Ausdehnung unwesentlich davon abweicht. Die aufeinanderfolgenden Grenzflächen in einer Struktur mit mehr als zwei Schichten sind zueinander in einer Dimension parallel. Durch das Größenverhältnis ihrer Ausdehnungen werden die Schichten auch als Filme bezeichnet.

Herstellungsverfahren für diese Filme sind Verfahren gemäß dem Stand der Technik, wie bspw. Vakuumsublimation, Sputterverfahren, Schleuderverfahren, Tauchmethoden.

Reflektierend im Sinne der Erfindung sind hochreflektive photonische Strukturen, auch als dielektrischer Spiegel bezeichnet, bei dem über Interferenzeffekte ein hoher Anteil an Strahlung (nahezu 100%) innerhalb eines spektral breiten Bandes (einige 10 nm - einige 100 nm) vollständig reflektiert wird. Im Unterschied zu metallischen Spiegeln ist der Wirkungsgrad nahezu 100%, da i.d.R. keine oder nahezu keine Strahlung absorbiert wird. Ein einfach gestalteter dielektrischer Spiegel besteht aus einer alternierenden Abfolge von Schichten aus für den betrachteten Wellenlängenbereich transparenten Materialien, die sich in ihrem jeweiligen Brechungsindex n voneinander unterscheiden. Im sichtbaren Spektrum wären dies beispielsweise die Materialien Siliziumdioxid (n_SiO2 = 1,46) und Titandioxid (n_TiO2 = 2,4-2,6), die auf jeweils eine optische Dicke n x d von einem Viertel der maximal zu reflektierenden Wellenlänge eingestellt werden. Bei einer Anzahl von etwa 7 - 9 alternierenden Schichtpaaren können Reflexionswerte > 99% erhalten werden. Für Anpassungen des konkreten Reflexionsverhaltens in einem breiten Spektralbereich von mehreren 100nm können zusätzliche Schichten oder Schichtstapel mit genau berechneten Schichtdickenabweichungen im Vergleich zu einfachen Modellen (z. B.: Simulation mit Transfer-Matrix-Methode) hinzugefügt werden.

Variable Schichtdicke im Sinne der Erfindung bezeichnet ein gezielt eingestelltes Profil der Dicke entlang mindestens einer horizontalen Achse, in der die Schichten flächig ausgedehnt sind. Dieses Profil kann diskrete Stufen aufweisen oder sich kontinuierlich ändern. Eine mögliche Ausprägung ist eine Keilform, bspw. für die Resonanzschicht, bei der ein Schichtdickenanstieg von 10nm - 20 nm pro mm in horizontaler Richtung vorliegt. Je geringer die Variation pro Längeneinheit, desto größer kann das spektrale Auflösungsvermögen sein, bzw. die Empfindlichkeit bei Verwendung größerer Detektoren, andererseits wird dadurch bei gleich bleibendem Messbereich die horizontale Ausdehnung größer.

Herstellungsverfahren für variable Schichtdicken umfassen u.a. Tauchverfahren mit zeitlich variabler Eintauchtiefe, unter einem Winkel aufgedampfte bzw. gesputterte Schichten, alternativ zeitlich variable Blenden, die eine Quelle abschirmen. Die Blenden können periodisch (z. B.: rotierend) die aufwachsende Schicht inhomogen abdecken, als auch vom Beginn zum Ende der Abscheidung zunehmend abdecken.

Mindestens ein Abschnitt der reflektierenden Schichtstruktur und/oder mindestens eine Resonanzschicht können aus einem dielektrischen Material bestehen.

Mindestens eine der reflektierenden Schichtstrukturen kann aus einem Schichtstapel alternierend hochbrechender und niedrigbrechender optisch transparenter Materialien bestehen.

Mindestens eine resonante Mode der Mikroresonatoren besitzt einen Transmissionsgrad höher als 10%, bevorzugt höher als 50%, besonders bevorzugt höher als 90%.

Der geometrische Aufbau und/oder die Material-Zusammensetzung beider Mikroresonatoren können symmetrisch zur Substratebene sein.

Beim Filterelement kann der Schichtdickenverlauf der reflektierenden Schichten entlang einer horizontalen Achse des Bauelementes oder Filterelements einen Bezug zum Verlauf der Resonanzschichtdicke besitzen.

Die erste Resonanzschicht des ersten Mikroresonators kann aus einem von der zweiten Resonanzschicht des zweiten Mikroresonators verschiedenen dielektrischen Material bestehen, und damit können die resonanten Moden eine Dispersionsparabel mit voneinander verschiedenen Krümmungen besitzen.

Die Ausdehnung der Oberfläche des Substrates kann senkrecht zur Schichtgradientenrichtung verhältnismäßig klein sein.

In Einstrahlrichtung können verlängerte, absorptive Wandelemente an den Seiten des Filterelements angebracht sein.

Ein lokal variables optisches Filterteil kann vor dem einen der Mikroresonatoren angebracht sein, bei dem durch absorptiv, transmittiv oder reflektiv wirkende Bandpässe eine spektrale Vorselektion des eintretenden Signals stattfindet.

Eine spektroskopische/spektrometrische Einrichtung zur Umwandlung von spektralen Informationen in Ortsinformationen umfasst zumindest
- eine Lichtquelle,
- einen Detektor,
- eine Auswerteeinheit, die über eine Verbindungsleitung mit dem Detektor verbunden ist,
- eine Anzeigeeinheit und
- ein vorgenanntes erfindungsgemäßes Filterelement,
wobei gemäß dem Kennzeichenteil des Patentanspruchs 10 das Filterelement derart ausgebildet ist, dass es einen kurzwelligen Anteil des Lichtes aus der Lichtquelle nach dem Durchgang durch das Filterelement im kurzwellig transparenten Bereich und einen langwelligen Anteil des Lichtes aus der Lichtquelle nach dem Durchgang durch das Filterelement im langwellig transparenten Bereich durchlässt sowie dass es einen langwelligen Anteil des Lichtes der Lichtquelle nach dem Auftreffen auf das Filterelement im kurzwellig transparenten Bereich und einen kurzwelligen Anteil des Lichtes der Lichtquelle nach dem Auftreffen auf das Filterelement im langwellig transparenten Bereich reflektiert.

Die spektroskopische/spektrometrische Einrichtung kann als Detektor einen photoelektrischen Reihen-/Matrix-Umwandler auf der Basis von CCD, CMOS, Photodiode oder Multiplier besitzen.

Der Bandpassfilter des erfindungsgemäßen Filterelements ist so gestaltet, dass eine Kollimation innerhalb des Filterelements stattfindet und keine weiteren optischen Elemente benötigt werden. Damit lassen sich besonders kompakte und preisgünstige spektroskopische Bauelemente bzw. Einrichtungen realisieren.

Zusammengefasst kann Folgendes festgestellt werden.

Vor einem Detektor (CCD- oder CMOS-Matrix, Diodenzeile, -array) wird das erfindungsgemäße optische Filterelement als ein spektraler (linearer) Verlaufsfilter angebracht. Der Verlaufsfilter besteht vorteilhaft aus mindestens einem photonischen Kristall mit ortsabhängig variabler Schichtdicke mindestens einer Schicht. Der Verlaufsfilter reflektiert in einem spektral breiten Band sämtliche einfallenden optischen Signale bis auf eine für die Struktur und von der Position abhängige spezifische Resonanz. Der nicht reflektierte schmale Spektralbereich (< 1 nm möglich) passiert den Filter nahezu ungehindert und kann anschließend im unmittelbar nachgeordneten Detektor in ein elektrisches Signal umgewandelt werden.

Die Erfindung betrifft somit ein optisches Filterelement zur Trennung des elektromagnetischen Spektrums im UV- bis IR-Bereich, welches in Kombination mit einem nachgeschalteten Signalwandler ermöglicht, ein elektromagnetisch breitbandiges Signal in seine Einzelkomponenten zu zerlegen (Spektroskopie, Spektrophotometrie). Bei der vorgestellten Erfindung sind keine vorgeschalteten optischen Elemente zur Signalformung notwendig, wodurch ein kompaktes integriertes Element realisiert werden kann.
Für die Auftrennung des elektromagnetischen Signals in seine Einzelkomponenten wird eine Anordnung von mindestens zwei variablen Mikroresonatoren verwendet, die sich gegenüberliegend auf der jeweiligen Oberfläche eines transparenten planparallelen Substrates befinden.
Werden für die variablen optischen Mikroresonatoren Fabry-Perot-Interferometer eingesetzt, kann bei hoher spektraler Auflösung gleichzeitig ein gutes bis sehr gutes Signal-Rauschverhältnis erzielt werden. Durch Anpassung der Parameter des Filterelements lassen sich einerseits die spektrale Breite und die Position des Messbereiches, eine hohe Richtungssensitivität oder eine sehr hohe Einzelsignaltrennung erzielen. Gleichzeitig ermöglicht der kompakte Aufbau des Filterelementes die Integration in eine Vielzahl bisher für die optische Spektroskopie nicht zugänglicher Prozesse. Für die Herstellung des Filterelements können aus dem Stand der Technik bekannte Verfahren zur Herstellung von Dünnschichtsystemen eingesetzt werden, welche unter anderem sowohl Vakuumbeschichtungsverfahren (PVD, CVD) als auch Sol-Gel-Verfahren umfassen.

Kernpunkt des optischen Filterelementes sind neben dem transparenten Substrat variable Bandpassfilter. Dabei bezeichnet der Begriff optisches Filterelement in diesem Zusammenhang ein Bauteil, das bei Bestrahlung mit einem beliebig spektral zusammengesetzten elektromagnetischen Signal im Wellenlängenbereich von 100 nm - 10 µm (UV - IR) Teile des spektral zusammengesetzten elektromagnetischen Signals in unterschiedlicher Stärke reflektiert oder transmittiert, gegebenenfalls auch absorbiert. Der Signalanteil wird durch den konkreten Aufbau des Filterelements bestimmt und kann spektrale Bänder von sub-nm bis einigen 100 nm Breite umfassen (Bandpass/Bandstopp), aber auch einzelne Bereiche des optischen Spektrums ausblenden (z. B.: Transmission von kurzen Wellenlängen unter Einsatz eines Kurzpasses).
Bei der vorgestellten Erfindung wird ein Substrat eingesetzt, dass für den angestrebten zu untersuchenden Wellenlängenbereich eine ausreichende Transparenz größer 25% besitzt. Als Materialien kommen dafür beispielsweise Festkörper wie Glas im UV/VIS-Bereich oder Silizium im IR-Bereich in Frage, aber auch Kunststoffe oder äquivalente Polymere können zum Einsatz kommen. Das Substrat besitzt allgemein eine flächige Ausdehnung von wenigen Millimetern bis einigen Zentimetern Kantenlänge. Die Dicke als dritte Größe ist ein für die Funktion des erfindungsgemäßen Filterelements entscheidender Parameter und beträgt zwischen einigen 1/10tel bis einigen Millimetern. Damit soll sichergestellt werden, dass die beiden Mikroresonatoren optisch entkoppelt sind. Dadurch findet keine Wechselwirkung zwischen ihnen statt, die zu einer gemeinsamen Resonanz führt, und sich in einer Entartung äußert und somit zu einer Linienverbreiterung und Auflösungsverschlechterung des Filters führt.
Beide ausgedehnte Flächen (im Folgenden als erste Oberfläche und als gegenüberliegende zweite Oberfläche des Substrates bezeichnet) besitzen eine zueinander planparallele Ausrichtung, die Dicke des Substrates ist also über die gesamte nutzbare Fläche konstant. Zusätzlich ist es zweckmäßig, dass die Oberflächengüte hoch ist, um Streueffekte zu vermeiden.

Weiterbildungen und weitere Ausgestaltungen der Erfindungen sind in weiteren Unteransprüchen angegeben.

Die Erfindung wird anhand mehrerer Ausführungsbeispiele mittels mehrerer Zeichnungen näher erläutert.
Es zeigt:
- Fig. 1: eine schematische Darstellung in Seitenansicht des optischen Filterelements in einem allgemeinen Ausführungsbeispiel,
- Fig. 2: winkelabhängige Transmissionsspektren von Mikroresonatoren, berechnet für eine Wellenlänge von 550nm, wobei Fig. 2a eine Resonanzschicht aus Siliziumdioxid und 100% Schichtdicke, Fig. 2b eine Resonanzschicht aus Siliziumdioxid und 100,5% Schichtdicke und Fig. 2c eine Resonanzschicht mit vierfacher Dicke aus Magnesiumfluorid und 100% Schichtdicke zeigt,
- Fig. 3: eine schematische Darstellung des Funktionsprinzips der Richtungsselektion einfallender elektromagnetischer Signale durch die variierende optische Geometrie entlang eines Schichtdickengradienten,
- Fig. 4a: eine schematische Darstellung eines Ausführungsbeispiels des Filterelements mit zusätzlichen, richtungsbeschränkenden Wandelementen,

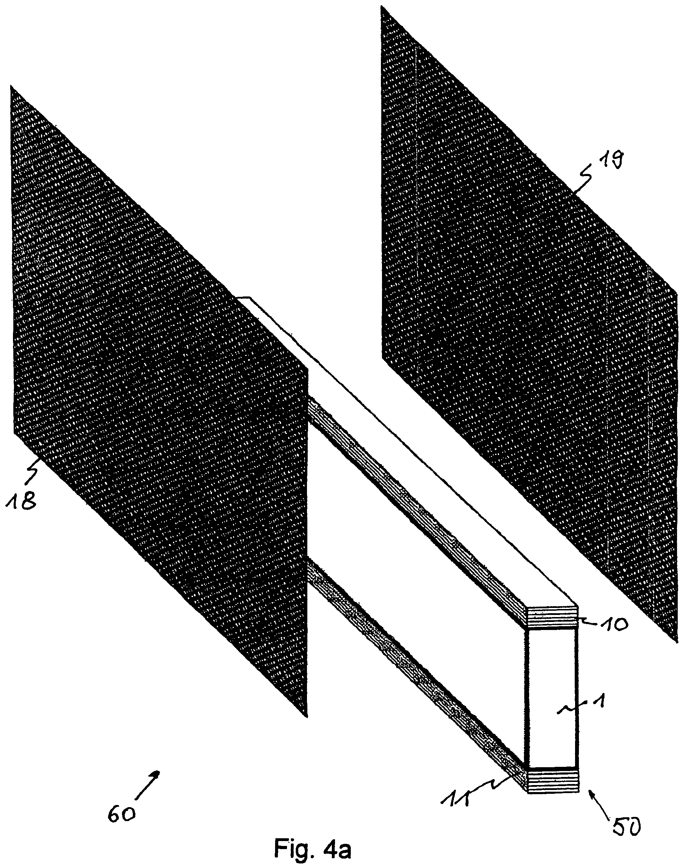

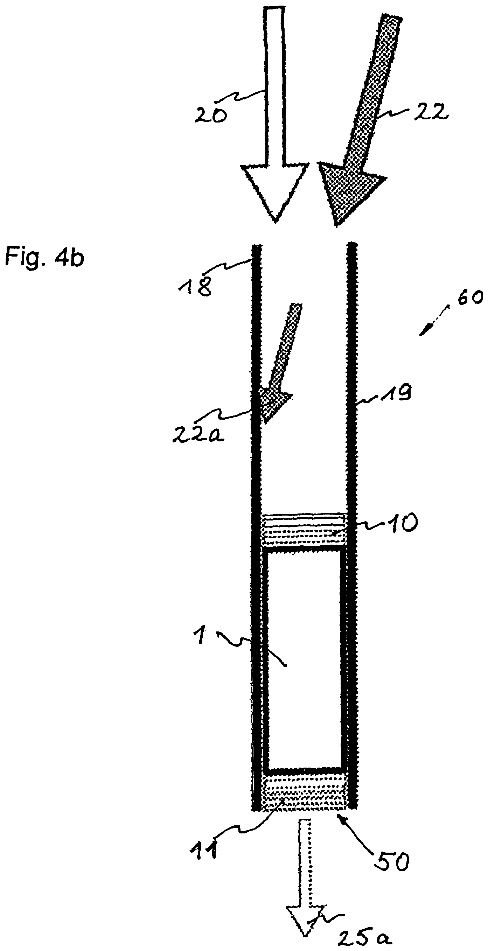

- Fig. 4: eine Seitenansicht des in Fig. 4a dargestellten Ausführungsbeispieles mit Darstellung des Funktionsprinzips,

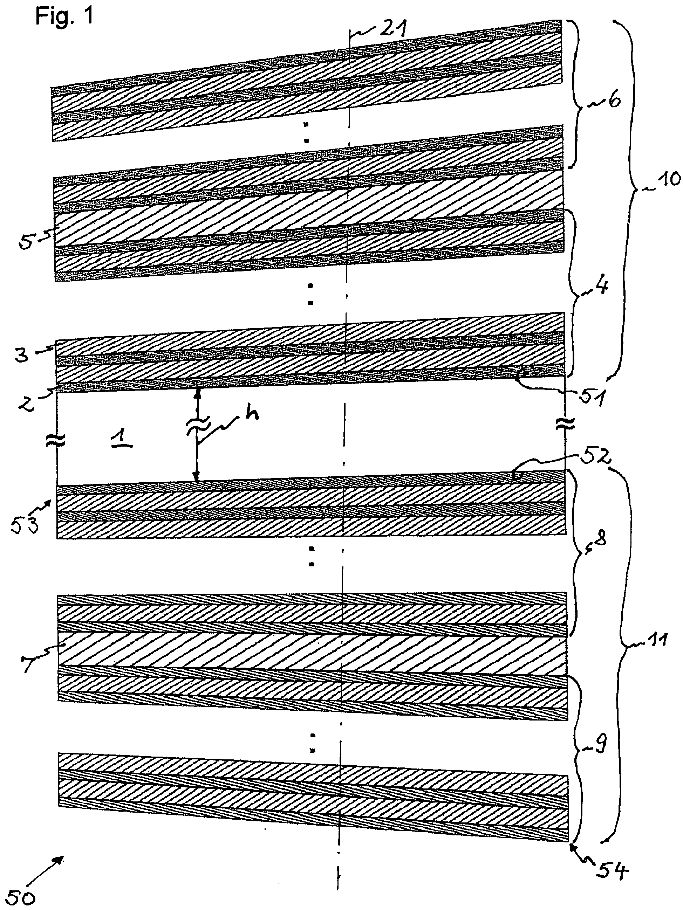

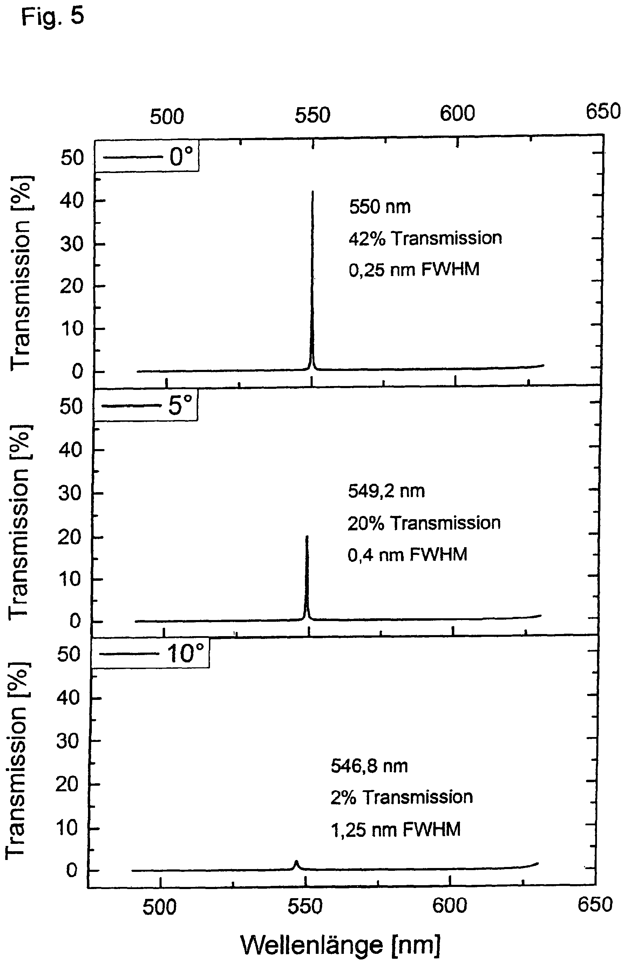

- Fig. 5: mehrere Transmissionsspektren eines optischen Filterelements, gemäß Fig. 1, berechnet für drei Einfallswinkel, wobei die erste Oberfläche einen Mikroresonator mit Titandioxid und die zweite Oberfläche einen Resonator mit Magnesiumfluorid als zentraler Resonanzschicht besitzt,

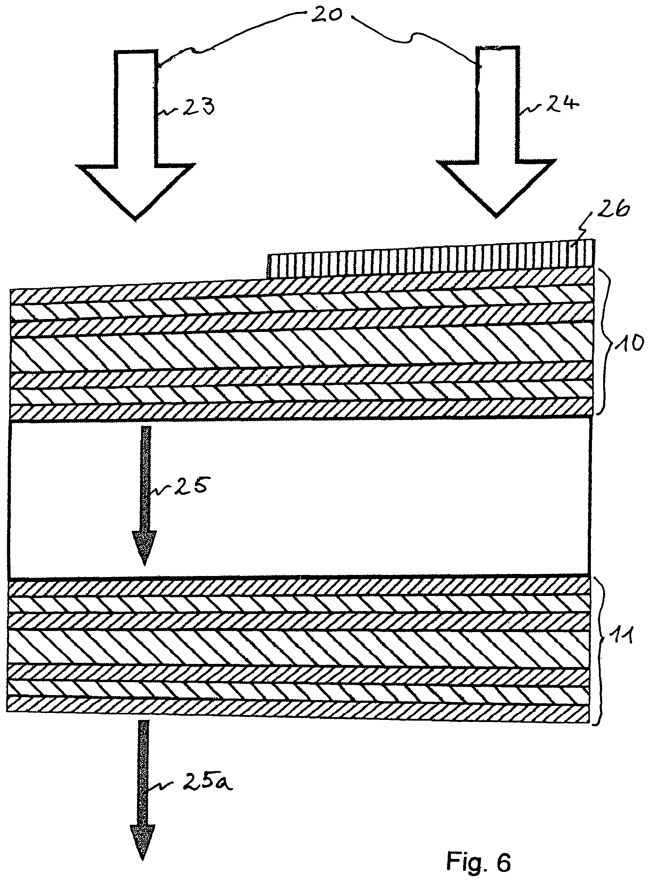

- Fig. 6: eine schematische Darstellung der örtlichen Beschränkung des Eingangssignals durch einen variabel absorptiv oder reflektiv wirkenden Vorfilter, und

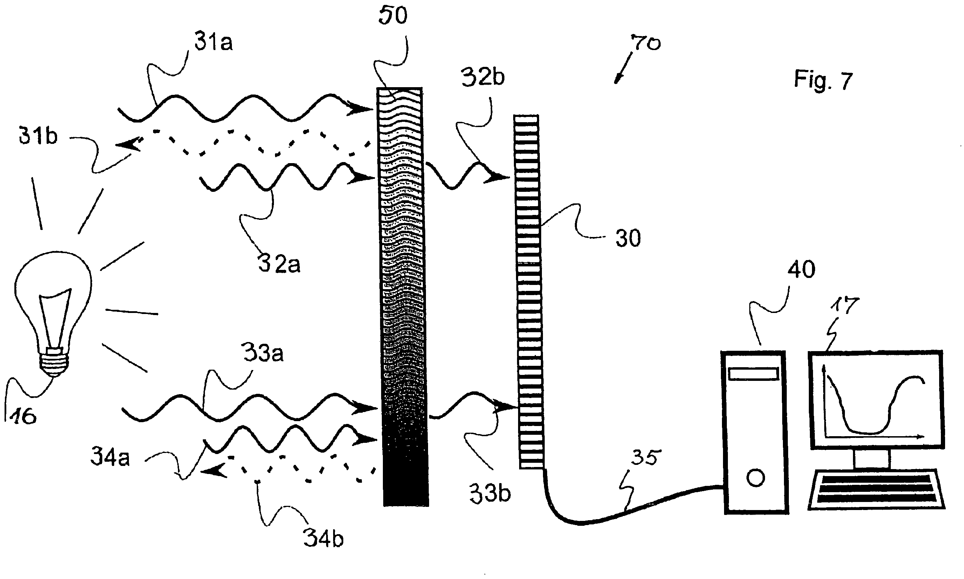

- Fig. 7: eine schematische Darstellung einer spektroskopischen / spektrometrischen Einrichtung.

In Fig. 1 ist der Aufbau eines optischen Filterelements 50 z. B. für eine spektroskopische oder spektrometrische Einrichtung zur Umwandlung von spektralen Informationen in Ortsinformationen schematisch skizziert.
Das optische Filterelement 50 umfasst zumindest zwei Mikroresonatoren 10, 11, wobei ein Mikroresonator 10; 11 zumindest aufweist
- mindestens zwei flächendeckende reflektierende Schichtstrukturen 4, 6; 8, 9 zumindest aus einer Materialschicht 2 mit hohem Brechungsindex und zumindest aus einer Materialschicht 3 mit niedrigem Brechungsindex in abwechselnder Folge sowie
- mindestens eine flächendeckende Resonanzschicht 5; 7, die zwischen den jeweils beiden flächendeckenden reflektierenden Schichtstrukturen 4, 6; 8, 9 angeordnet ist.

Erfindungsgemäß umfasst das Filterelement 50 zumindest ein transparentes, planparalleles Substrat 1 zur optischen Entkopplung der beiden Mikroresonatoren 10, 11, wobei sich auf einer ersten der beiden sich gegenüberliegenden Oberflächen 51; 52 des Substrats 1 der erste Mikroresonator 10; 11 befindet, wobei sich auf dem Substrat 1 auf einer der ersten Oberfläche 51 gegenüberliegenden zweiten Oberfläche 54 des Substrats 1 der zweite Mikroresonator 11; 10 befindet, und wobei die Resonanzschicht 5; 7 eines Mikroresonators 10, 11 und/oder die jeweils die Resonanzschicht 5; 7 umgebende reflektierende Schichtstruktur 4, 6; 8, 9 eine variable Schichtdicke entlang einer horizontalen Achse 25 des Filterelementes 50 aufweisen.

Zentral befindet sich das für den zu analysierenden Spektralbereich transparente Substrat 1 mit zueinander planparallelen, optisch glatten Oberflächen 51 und 52. Die Dicke h des Substrates 1 ist dabei in Zusammenspiel mit dem relativen Dickengradienten der dielektrischen Schichten 2, 3 ein entscheidender Parameter für die Richtungsselektivität bzw. die Auflösung des Filterelements 50. Auf die erste Oberfläche 51 des Substrates 1 wird nun über die wechselseitige Abscheidung von dielektrischen Materialschichten 2 mit hohem Brechungsindex und dielektrischen Materialschichten 3 mit niedrigem Brechungsindex ein erster Schichtstapel 4 erzeugt, der als breitbandiger Reflektor (eindimensionaler photonischer Kristall) wirkt. Der dielektrische erste Schichtstapel 4 in Fig. 1 ist nicht von konstanter Dicke, sondern besitzt einen kontinuierlichen Schichtdickengradienten. Der relative Dickenunterschied zwischen beiden Seitenflächen 53 und 54 des Filterelements 50 wird durch die Anforderung an die Breite des Messbereiches festgelegt. Die Anzahl der einzelnen wechselnden Schichten 2 und 3 bestimmt die Auflösung des optischen Filterelements 50. Der Einsatz vieler Schichten 2 und 3 erlaubt eine bessere Trennung nahe beieinanderliegender Signale, kann sich aber negativ auf die Sensitivität auswirken und erhöht auch die Herstellungsanforderungen.

Auf den ersten Reflektor 4 wird nun eine Resonanzschicht 5 aufgebracht, die in der optischen Betrachtungsweise einer Störung des photonischen Kristalls entspricht. Typischerweise entspricht deren Dicke einem Vielfachen der Dicke der Materialschicht 2 und der Materialschicht 3. Auch bei der Materialschicht 2 und bei der Materialschicht 3 ist jeweils ein Schichtgradient vorhanden, welcher sich am relativen Schichtdickenverlauf des Reflektors 4 orientiert.

Abgeschlossen wird der erste Teil des Filterelements 50 durch einen zweiten dielektrischen Reflektor 6, wodurch nun ein sogenannter Mikroresonator 10 mit lokal variabler Schichtdicke und damit kontinuierlich verändertem Transmissionsverhalten entsteht. Wie bei jedem Resonator, wird in dem Mikroresonator 10 mindestens eine der Geometrie entsprechende Frequenz durch Mehrfachreflexion verstärkt und alle weiteren Anteile des Spektrums unterdrückt.

Die auf den ersten Teil einfallende elektromagnetische Strahlung innerhalb des Messbereiches wird lokal spektral getrennt und kann das Substrat 1 durchdringen. Um das Problem der intrinsischen Dispersion des Mikroresonators 10 zu umgehen, welches eine Kalibrierung unmöglich machen würde, ist es notwendig, die Richtung des zu messenden Signals einzuschränken. Dazu dient erfindungsgemäß ein zweiter Mikroresonator 11 mit ähnlicher Geometrie. Der zweite Mikroresonator 11 setzt sich ebenfalls aus einem ersten dielektrischen Spiegel 8 und einem zweiten dielektrischen Spiegel 9 sowie einer zwischen beiden Spiegeln/Reflektoren 8 und 9 liegenden Resonanzschicht 7 zusammen.

Im einfachsten Fall handelt es sich bei dem zweiten Mikroresonator 11 um ein vollständig symmetrisches Abbild des ersten Mikroresonators 10. Aber auch eine veränderte Anzahl an Schichten 2, 3 bzw. Materialzusammensetzung oder Dicke der Resonanzschicht 5 und 7 ist möglich. Entscheidend ist es, dass für einen festgelegten Winkel über der gesamten Ausdehnung des Filterelements 50 eine Übereinstimmung der resonanten Wellenlänge(n) vorliegt. Dementsprechend sind die Schichtdickengradienten zueinander angepasst.

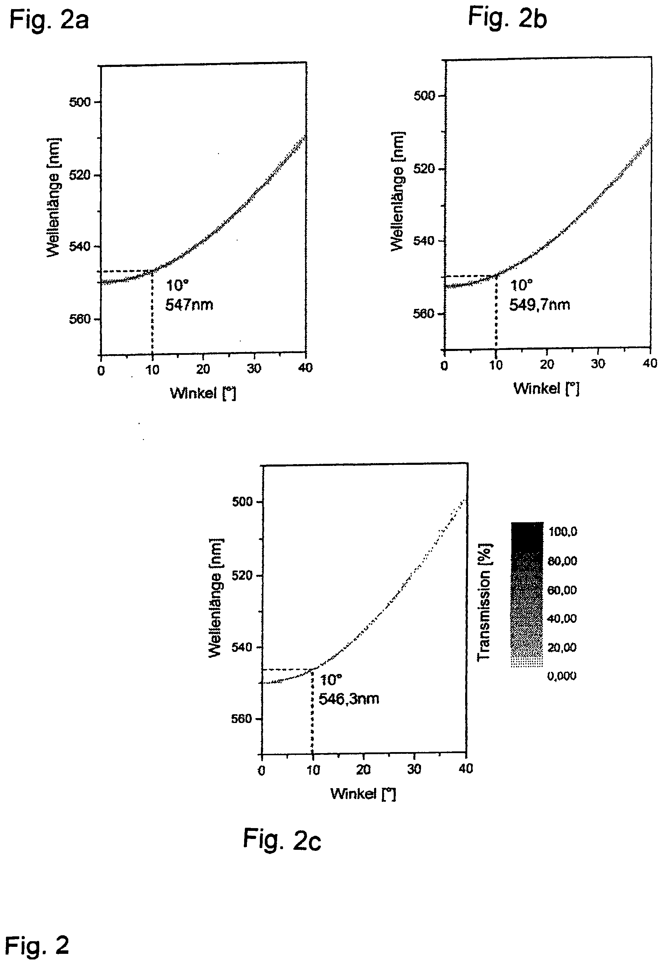

In Fig. 2 sind winkelabhängige Transmissionsspektren von Mikroresonatoren 10 oder 11, berechnet für eine Wellenlänge von 550 nm dargestellt, wobei in Fig. 2a eine Resonanzschicht aus Siliziumdioxid und 100% Schichtdicke, in Fig. 2b eine Resonanzschicht aus Siliziumdioxid und 100,5% Schichtdicke und in Fig. 2c eine Resonanzschicht mit vierfacher Dicke aus Magnesiumfluorid und 100% Schichtdicke gezeigt werden.
Dazu ist der für drei verschiedene, modellhaft gerechnete Mikroresonatoren 10 typische energetische Verlauf einer resonanten Mode (Dispersion) dargestellt. Bei normaler Materialdispersion verschiebt sich der spektral schmale (< 1 nm FHWM), transparente Bereich mit zunehmenden Einfallswinkel zu kürzeren Wellenlängen (höheren Energien) entsprechend ∼1/(*n d* cos(α)). Dabei ist *n* der Brechungsindex des Materials, *d* die Dicke der Resonanzschicht 5 und α der Propagationswinkel.
Für die Berechnung werden reale Materialwerte verwendet. Als beispielhaftes Filterelement 50 wird ein dielektrischer Spiegel 4, bestehend aus 550 nm/(4*n_{Material}*) dicken, alternierenden Schichten 2 und 3 von Titandioxid und Siliziumdioxid angenommen. Auf einem Glassubstrat 1 werden 7.5 Paare angeordnet, anschließend folgt die Resonanzschicht 5 und darauf wird ein zweiter dielektrischer Spiegel 6 angeordnet. Dabei entspricht die Dicke der Einzelschichten 2, 3 bei:
Fig. 2a 100% der Dicke von 550 nm/(4*n_{Material}*), wobei als Resonanzschicht 5 eine Schicht Siliziumdioxid mit einer Dicke von 550 nm/(2*n_{Siliziumdioxid}*) zum Einsatz kommt,
Fig. 2b 100,5% der Dicke von 550 nm/(4*n_{Material}*), wobei als Resonanzschicht 5 eine Schicht Siliziumdioxid mit einer ebenfalls auf 100,5% erhöhten Dicke des Wertes von 550 nm/(2*n_{Siliziumdioxid}*) zum Einsatz kommt, und
Fig. 2c 100% der Dicke von 550 nm/(4*n_{Material}*), wobei als Resonanzschicht 5 eine Schicht Magnesiumfluorid mit einer Dicke von (2.550 nm*)*/*n_{Magnesiumfluorid}* zum Einsatz kommt.

Trotz des sehr ähnlichen Verlaufs ist ersichtlich, dass Abweichungen vorhanden sind. Beim Vergleich des Spektrums in Fig. 2a und des Spektrums in Fig. 2b lässt sich der Einfluss der Schichtdicke *d* der Resonanzschicht 5 auf die Position der resonanten Mode erkennen. Die Erhöhung um 0.5% (entsprechend 1 nm physikalischer Dicke) verschiebt die gesamte Dispersionsparabel um nahezu 3 nm zu längeren Wellenlängen. Eine Überkreuzung der Resonanz zwischen Fig. 2a und Fig. 2b ist bei genügend schmaler Resonanzbreite beider Mode (< 1 nm) für keinen Winkel mehr gegeben.
Bei dem Spektrum in Fig. 2c ist ein aus dem niedrigeren Brechungsindex von Magnesiumfluorid sowie der vervierfachten Schichtdicke resultierender, steilerer Anstieg der zugehörigen Dispersionsparabel erkennbar. Wird nun das Spektrum in Fig. 2a mit dem Spektrum in Fig. 2c miteinander verglichen, so wird ersichtlich, dass sich bei niedrigem Winkel die resonanten Moden kreuzen und mit zunehmendem Winkel auseinanderlaufen (Resonanz jeweils beispielhaft für 10° bestimmt).

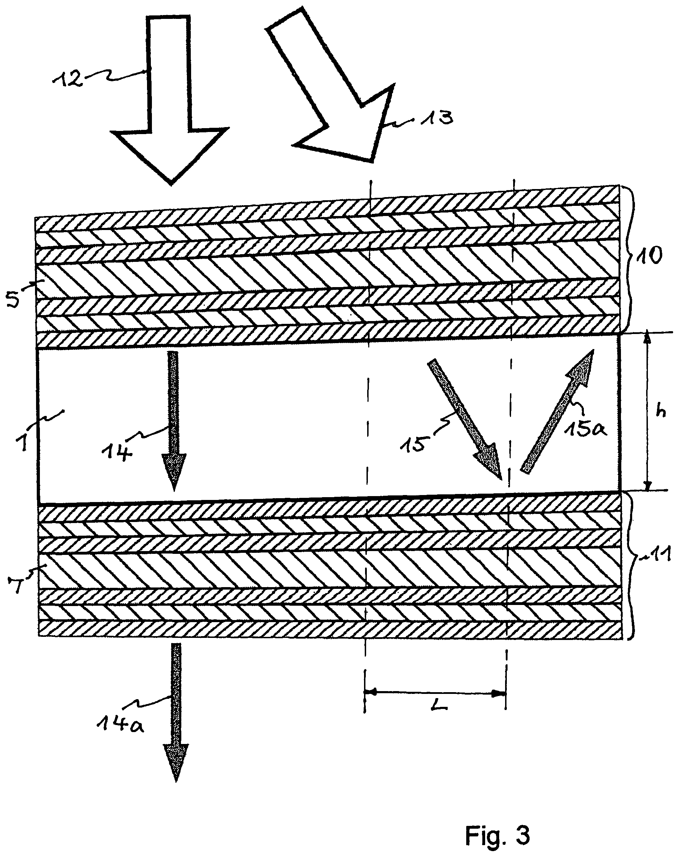

Die Fig. 3 zeigt das Funktionsprinzip der Richtungsselektion des in Fig. 1 eingeführten Filterelements 50, basierend auf den Effekten, die in der Erläuterung von Fig. 2 aufgeführt werden. Beide Mikroresonatoren 10, 11 besitzen denselben Gradienten und befinden sich gegenüberliegend auf der Oberfläche des Substrates 1 mit einer Dicke h. Ein senkrecht einfallendes Signal 12 trifft auf den ersten Mikroresonator 10, und der bei 0° entsprechende in Fig. 2a angegebene Signalanteil des Zwischensignals 14 wird transmittiert und trifft nach Durchgang des Substrates 1 auf den zweiten Mikroresonator 11. Da beide Resonatoren 5 und 7 symmetrisch sind, besitzt der zweite Mikroresonator 11 an der Eintrittsposition des Signalanteils 14 dasselbe Transmissionsverhalten, dadurch kann der Signalanteil (ggf. abgeschwächt) 14 den zweiten Mikroresonator 11 durchdringen und als Austrittsignal 14a detektiert werden.

Trifft ein geneigt einfallendes Signal 13 unter einem höheren Winkel auf den ersten Mikroresonator 10, so wird ein, diesem Winkel gemäß Fig. 2a entsprechender Signalanteil 15 als resonante Mode transmittiert, die Wellenlänge ist in diesem Fall kleiner als beim senkrechten Einfall des Signals 12. Innerhalb des im Vergleich zu den Mikroresonatoren 10, 11 dicken Substrates 1 legt diese Mode einen Weganteil L entlang des Schichtdickengradienten der Mikroresonatoren 10, 11 zurück, der sich aus der Substratdicke h sowie dem Einfallswinkel des geneigt einfallenden Signals 13 ergibt.
An der Eintrittsposition zum zweiten Mikroresonator 11 trifft das geneigt einfallende Signal 13 nun auf eine durch den Gradienten verursachte, abweichende Schichtdicke (dünner bzw. dicker) auf. Demzufolge überkreuzen sich, wie in der Beschreibung von Fig. 2 dargelegt, die Dispersionsparabeln unter Beibehaltung des Neigungs-Winkels an keinem Punkt mehr und das Signal 15 wird als Signal 15a reflektiert, statt transmittiert. Maßgeblich für den Akzeptanzwinkel, bei dem eine resonante Mode durch beide Mikroresonatoren 10, 11 dringt, ist die spektrale Auflösung (Finesse) der einzelnen Mikroresonatoren 10, 11, die Dicke h des Substrates 1 und der relative Schichtdickengradient.

In Fig. 4a ist ein Ausführungsbeispiel eines Bauelements 60 mit Filterelement 50 dargestellt, bei dem über hochabsorbierende Wandelemente 18, 19 sichergestellt wird, dass auch senkrecht zum Dickengradienten der Mikroresonatoren 10, 11 eine Richtungsselektion stattfindet. In dieser Richtung sorgt die identische Geometrie dafür, dass die Transmissionsparabeln gemäß Fig. 2 überlappen, somit wäre eine Wellenlängenkalibrierung bei geneigt einfallendem Licht des Eingangssignals 13 nicht möglich. Mit Hilfe der Wandelemente 18, 19 wird nun ein Winkelbereich des Eingangssignals 13 selektiert. Dazu ist die Ausdehnung des Filterelements 50 senkrecht zum Gradienten deutlich kleiner, als möglicher Sensor kommen hier beispielsweise Linienelemente zum Einsatz.

In Fig. 4b ist das spezifische Ausführungsbeispiel des Bauelements 60 gemäß Fig. 4a in Seitenansicht dargestellt, um die Selektion des Neigungs-Winkels des einfallenden Signals 22 zu demonstrieren. Fällt ein Eingangssignal 20 senkrecht innerhalb der dargestellten Ebene in das Bauelement 60 mit dem Filterelement 50, so wird es von den Wandelementen 18, 19 nicht beeinflusst und kann anschließend entsprechend Fig. 3 nach Durchgang durch die Mikroresonatoren 10, 11 auf der Rückseite als Signal 25a detektiert werden. Ein geneigter Strahl 22 unter einem genügend großen Winkel trifft auf seinem Weg durch das Bauelement 60 auf eines der Wandelemente 18, 19 und wird hier als Signal 22a absorbiert. Der Akzeptanzwinkel und daraus folgend die spektrale Auflösung des Filterelements 50 innerhalb der dargestellten Ebene wird durch das Verhältnis von Wandhöhe und Wanddistanz der Wandelemente 18, 19 festgelegt. Dadurch ist eine Miniaturisierung des gesamten Bauelementes 60 möglich, wenn die Breite des Filterelements 50 senkrecht zum Schichtgradienten sehr schmal ist. Die Ausdehnung sollte jedoch ein Vielfaches der mittleren zu analysierenden Wellenlänge betragen, um den Einfluss von Beugungseffekten zu unterdrücken und gleichzeitig ein genügend starkes Eingangssignal für ein hohes Signal-Rausch-Verhältnis zu erhalten.

Die Fig. 5 zeigt anhand von drei berechneten Transmissionsspektren für unterschiedliche Einfallswinkel ein alternatives Verfahren für die Richtungsselektion des Eingangssignals 20 senkrecht zum Dickengradienten des Mikroresonators 10. Dargestellt ist dabei eine transmittierte Mode innerhalb des ansonsten spektral undurchlässigen Wellenlängenbereichs (Stopband). Das Filterelement 50 besitzt auf seiner ersten Seite eine 550 nm/(2*n_{Titandioxid}*) dicke Resonanzschicht 5 aus dem hochbrechendem Material Titandioxid (n = 2.1), auf der zweiten Seite einen niedrigbrechenden Mikroresonator 11 aus Magnesiumfluorid (n = 1.35) mit einer Dicke von (3.550 nm)/2*n_{Magnesiumfluorid}.* Der Gradient ist symmetrisch zum Substrat 1, wodurch bei senkrechtem Lichteinfall die Moden beider Mikroresonatoren 10 und 11 übereinstimmen gemäß Fig. 2a und gemäß Fig. 2c. Mit zunehmendem Einfallswinkel (bei 5° und 10°) verschiebt sich die Resonanz erwartungsgemäß zu kürzeren Wellenlängen, gleichzeitig sinkt aber auch die Stärke des Signals stark ab, da sich beide Parabeln durch die unterschiedliche Dispersion zunehmend voneinander separieren.
Die spektrale Auflösung wird im Vergleich zur Transmission unter senkrechtem Lichteinfall durch diesen Effekt in Richtung kurzer Wellenlängen verbreitert, kann aber weiterhin entsprechend des spezifischen Aufbaus des Filterelements 50 klein ausfallen (< 1 nm).
Bei der Simulation wurde ein Mikroresonator 10 aus 7.5 Paaren abwechselnder Siliziumdioxid- und Titandioxidschichten (Dicke von 550 nm/(4*n_{Material}*) ) angenommen, eine Verringerung erhöht die mögliche Signalstärke, verringert aber den Effekt der Winkelselektion und reduziert dadurch die spektrale Auflösung.

Im Gegensatz zur Realisierung des Bauelements 60, wie in Fig. 4a, 4b dargelegt wird, sind hier keine weiteren Elemente zur Eingrenzung des Signals senkrecht zum Schichtgradienten notwendig. Dadurch kann das Bauelement 60 auch flächig ausgedehnt sein und eignet sich somit, die spektrale Detektion mittels eines Matrixdetektors entlang einer Ortskoordinate oder abgebildeten Winkelkoordinate durchzuführen.

In Fig. 6 ist schematisch dargestellt, wie ein Eingangssignal 20 in den Positionen 23, 24, welches spektral den undurchlässigen Wellenlängenbereich (Sperrbereich) überschreitet, dennoch eindeutig mit dem vorgestellten Bauelement 60 detektiert werden kann. An einer ersten Position 23 des Eingangssignals 20 befindet sich das spektral breite Eingangssignal 20 innerhalb der Grenzen des Sperrbereiches. Eine Detektion kann nach vorherigem Durchgang durch die Mikroresonatoren 10, 11 entsprechend den in den vorherigen Ausführungen erläuterten Prinzipien mit Zwischensignal 25 und Austrittsignal 25a stattfinden. An einer zweiten Position 24 des Eingangssignals 20 überschreitet das spektral breite Eingangssignal 20 die Grenze des Sperrbereiches, wobei eine eindeutige Zuordnung des detektierbaren Signals 25a nicht mehr möglich (entweder resonante Mode oder transmittiertes Licht außerhalb des Sperrbereiches) ist. Aus diesem Grund wird über ein vorgelagertes, lokal variables Filterteil 26 der Teil des Spektrums unterdrückt, der außerhalb des jeweiligen Sperrbereiches liegt. Das Filterteil 26 kann sowohl absorptiv wirken (z. B.: funktionelle Farbstoffe), als auch reflektiv (Bandpassfilter). Für die lokale Anordnung des Filterteils 26 sind diskrete Stufen als auch Schichtgradientenverläufe möglich.

In Fig. 7 ist eine spektroskopische/spektrometrische Einrichtung 70 zur Umwandlung von spektralen Informationen in Ortsinformationen angegeben, die zumindest umfasst
- eine Lichtquelle 16,
- einen Detektor 30,
- eine Auswerteeinheit 40, die über eine Verbindungsleitung 35 mit dem Detektor 30 verbunden ist,
- eine Anzeigeeinheit 17 und
- ein vorgenanntes erfindungsgemäßes Filterelement 50,
wobei das Filterelement 50 derart ausgebildet ist, dass es einen kurzwelligen Anteil 32b des Lichtes aus der Lichtquelle 16 nach dem Durchgang durch das Filterelement 50 im kurzwellig transparenten Bereich und einen langwelliger Anteil 33b des Lichtes aus der Lichtquelle 16 nach dem Durchgang durch das Filterelement 50 im langwellig transparenten Bereich durchlässt sowie dass es einen langwelligen Anteil 31b des Lichtes der Lichtquelle 16 nach dem Auftreffen auf das Filterelement 50 im kurzwellig transparenten Bereich und einen kurzwelligen Anteil 34b des Lichtes der Lichtquelle 16 nach dem Auftreffen auf das Filterelement 50 im langwellig transparenten Bereich reflektiert.

In Fig. 7 sind folgende Lichtanteile angegeben
ein langwelliger Anteil 31a des Lichtes der Lichtquelle 16 vor dem Auftreffen auf das Filterelement 50 im kurzwellig transparenten Bereich,
ein langwelliger Anteil 31b des Lichtes der Lichtquelle 16 nach dem Auftreffen auf das Filterelement 50 im kurzwellig transparenten Bereich,
ein kurzwelliger Anteil 32a des Lichtes der Lichtquelle 16 vor dem Durchgang durch das Filterelement 50 im kurzwellig transparenten Bereich,
ein kurzwelliger Anteil 32b des Lichtes der Lichtquelle 16 nach dem Durchgang durch das Filterelement 50 im kurzwellig transparenten Bereich,
ein langwelliger Anteil 33a des Lichtes der Lichtquelle 16 vor dem Durchgang durch das Filterelement 50 im langwellig transparenten Bereich,
ein langwelliger Anteil 33b des Lichtes der Lichtquelle 16 nach dem Durchgang durch das Filterelement 50 im langwellig transparenten Bereich,
ein kurzwelliger Anteil 34a des Lichtes der Lichtquelle 16 vor dem Auftreffen auf das Filterelement 50 im langwellig transparenten Bereich und
ein kurzwelliger Anteil 34b des Lichtes der Lichtquelle 16 nach dem Auftreffen auf das Filterelement 50 im langwellig transparenten Bereich.

Die Vorteile des erfindungsgemäßen Filterelements 50 für ein Spektrometer 70 bestehen in Folgendem:
Der erfindungsgemäße Aufbau ermöglicht die Realisierung von besonders platzsparenden Spektrometern 70 in Ausbreitungsrichtung des Lichtsignals, da bei minimalem Abstand zwischen dem Filterelement 50 und dem Detektor 30 gemäß Fig. 7 ausschließlich deren vertikale Ausdehnung die Größe des Spektrometers 70 definiert.
Wird für den Detektor 30 ein zweidimensionales Element (Matrix) eingesetzt, kann je nach optischer Konfiguration auf der Eingangsseite einerseits die Signalqualität erhöht werden (Integration), oder es kann eine orts-/winkelabhängige spektrale Messung durchgeführt werden.
Durch den Einsatz dielektrischer Materialien kann eine hohe Sensitivität (Transmission der Resonanz nahe 100%) bei gleichzeitig hoher Selektivität (schmale Halbwertsbreite des Signals) und günstigem SNR (spektrale Umgebung der Resonanz mit Transmission <0,1%) erreicht werden. Durch die Wahl der lateralen Ausdehnung der Filterelement-Detektor-Kombination sowie der Dichte der Detektorelemente besteht zusätzlich die Möglichkeit, einen Einfluss auf die Auflösung des Spektrometers zu nehmen.
Die Verwendung nicht-gleichförmiger Schichtdickenverläufe erlaubt die Herstellung spezifischer Spektrometer mit verschiedenen Messbereichen in einem Gerät (z. B.: grobe spektrale Übersicht und fein aufgelöster Ausschnitt). Der prinzipielle Aufbau lässt sich außerdem leicht verkapseln und durch die geringe Anzahl notwendiger Komponenten in besonders beanspruchten Umgebungen einsetzen.

Des Weiteren sind die Bestandteile, wie hochauflösende Detektoren 30, inzwischen Massenware und die Filterelemente 50 lassen sich in größeren Mengen parallel herstellen, so dass die Gesamtkosten eines Spektrometers 70 mit dem erfindungsgemäßen optischen Filterelement 50 gering ausfallen können.

### Bezugszeichenliste

- 1: Substrat
- 2: Materialschicht hohen Brechungsindexes
- 3: Materialschicht niedrigen Brechungsindexes
- 4: erster Schichtstapel/erster Reflektor
- 5: erste Resonanzschicht
- 6: zweiter Schichtstapel/zweiter Reflektor
- 7: zweite Resonanzschicht
- 8: Schichtstapel/Reflektor
- 9: Schichtstapel/Reflektor
- 10: erster Mikroresonator
- 11: zweiter Mikroresonator
- 12: einfallendes Signal
- 13: Eingangssignal
- 14: Zwischensignal
- 14a: Austrittssignal
- 15: reflektierender Signalanteil
- 15a: transmittierender Signalanteil
- 16: Lichtquelle
- 17: Anzeigeeinheit
- 18: erstes Wandelement
- 19: zweites Wandelement
- 20: Eingangssignal
- 21: horizontale Achse des Filterelements
- 22: geneigt einfallendes Signal
- 22a: absorbiertes Signal
- 23: Position
- 24: Position
- 25: Zwischensignal
- 25a: Austrittsignal
- 26: Filterteil
- 30: Detektor
- 31a: Langwelliger Anteil des Lichtes vor dem Auftreffen auf das Filterelement im kurzwellig transparenten Bereich
- 31 b: Langwelliger Anteil des Lichtes nach dem Auftreffen auf das Filterelement im kurzwellig transparenten Bereich
- 32a: Kurzwelliger Anteil des Lichtes vor dem Durchgang durch das Filterelement im kurzwellig transparenten Bereich
- 32b: Kurzwelliger Anteil des Lichtes nach dem Durchgang durch das Filterelement im kurzwellig transparenten Bereich
- 33a: Langwelliger Anteil des Lichtes vor dem Durchgang durch das Filterelement im langwellig transparenten Bereich
- 33b: Langwelliger Anteil des Lichtes nach dem Durchgang durch das Filterelement im langwellig transparenten Bereich
- 34a: Kurzwelliger Anteil des Lichtes vor dem Auftreffen auf das Filterelement im langwellig transparenten Bereich
- 34b: Kurzwelliger Anteil des Lichtes nach dem Auftreffen auf das Filterelement im langwellig transparenten Bereich
- 35: Verbindungsleitung
- 40: Auswerteeinheit
- 50: Filterelement zur Umwandlung von Spektralinformation in eine Ortsinformation
- 51: erste Oberfläche
- 52: zweite Oberfläche
- 53: erste Filterelementseite
- 54: zweite Filterelementseite
- 60: Bauelement
- 70: spektroskopische Einrichtung

- h: Dicke des Substrats
- d: Dicke der Resonatorschicht
- *α*: Propagationswinkel
- n: Brechungsindex

## Patentansprüche

1. Optisches Filterelement (50) für Einrichtungen (70) zur Umwandlung von spektralen Informationen in Ortsinformationen mit einem zugeschalteten Detektor (30) zur Erfassung von Signalen, wobei Licht, das ganzflächig auf das Filterelement (50) trifft, nach dem Durchgang durch das Filterelement (50) über dessen räumliche Ausdehnung in die einzelnen spektralen Komponenten aufgetrennt wird,
zumindest umfassend zwei Mikroresonatoren (10, 11),
wobei beide Mikroresonatoren (10; 11) zumindest aufweisen
- mindestens zwei flächendeckende reflektierende Schichtstrukturen (4, 6; 8, 9) zumindest aus einer Materialschicht (2) mit hohem Brechungsindex und zumindest aus einer Materialschicht (3) mit niedrigem Brechungsindex in abwechselnder Folge sowie
- mindestens eine flächendeckende Resonanzschicht (5; 7), die zwischen den jeweils beiden flächendeckenden reflektierenden Schichtstrukturen (4, 6; 8, 9) angeordnet ist,
**dadurch gekennzeichnet,**
**dass** das Filterelement (50) zumindest umfasst
ein transparentes, planparalleles Substrat (1) zur optischen Entkopplung der beiden Mikroresonatoren (10, 11),
wobei sich auf einer ersten der beiden sich gegenüberliegenden Oberflächen (51; 52) des Substrats (1) der erste Mikroresonator (10; 11) befindet, wobei sich auf dem Substrat (1) auf einer der ersten Oberfläche (51) gegenüberliegenden zweiten Oberfläche (54) des Substrats (1) der zweite Mikroresonator (11; 10) befindet, und
wobei die Resonanzschicht (5; 7) und/oder die jeweils die Resonanzschicht (5; 7) umgebende reflektierende Schichtstruktur (4, 6; 8, 9) eine variable Schichtdicke entlang einer horizontalen Achse (25) des Filterelementes (50) aufweisen.

2. Optisches Filterelement nach Anspruch 1,
**dadurch gekennzeichnet,**
**dass** mindestens ein Abschnitt der reflektierenden Schichtstruktur (4, 6; 8, 9) und/oder mindestens eine Resonanzschicht (5; 7) aus einem dielektrischen Material bestehen.

3. Optisches Filterelement nach Anspruch 1,
**dadurch gekennzeichnet,**
**dass** mindestens eine der reflektierenden Schichtstrukturen (4, 6; 8, 9) aus einem Schichtstapel alternierend hochbrechender und niedrigbrechender optisch transparenter Materialien besteht.

4. Optisches Filterelement nach den Ansprüchen 1 bis 3,
**dadurch gekennzeichnet,**
**dass** mindestens eine resonante Mode der Mikroresonatoren (10, 11) einen Transmissionsgrad höher als 10%, bevorzugt höher als 50%, besonders bevorzugt höher als 90% besitzt.

5. Optisches Filterelement nach den Ansprüchen 1 bis 4,
**dadurch gekennzeichnet,**
**dass** der geometrische Aufbau und/oder die Material-Zusammensetzung beider Mikroresonatoren (10, 11) symmetrisch zur Substratebene sind.

6. Optisches Filterelement nach Anspruch 1,
**dadurch gekennzeichnet,**
**dass** die erste Resonanzschicht (5) des ersten Mikroresonators (10) aus einem von der zweiten Resonanzschicht (7) des zweiten Mikroresonators (11) verschiedenen dielektrischen Material besteht und damit die resonante Moden eine Dispersionsparabel mit voneinander verschiedenen Krümmungen besitzen.

7. Optisches Filterelement nach Anspruch 1,
**dadurch gekennzeichnet,**
**dass** die Ausdehnung der Oberfläche (51, 52) des Substrates (1) senkrecht zur Schichtdickengradientenrichtung kleiner als in Schichtdickengradientenrichtung ist.

8. Optisches Filterelement nach Anspruch 1,
**dadurch gekennzeichnet,**
**dass** in Einstrahlrichtung verlängerte, absorptive Wandelemente (18, 19) an den Seiten (53, 54) des Filterelements (5) angebracht sind.

9. Optisches Filterelement nach Anspruch 1,
**dadurch gekennzeichnet,**
**dass** ein lokal variables optisches Filterteil (26) vor dem einen der Mikroresonatoren (10, 11) angebracht ist, bei dem durch absorptiv, transmittiv oder reflektiv wirkende Bandpässe eine spektrale Vorselektion eines eintretenden Signals (20) stattfindet.

10. Spektroskopische/spektrometrische Einrichtung (70) zur Umwandlung von spektralen Informationen in Ortsinformationen, zumindest umfassend
- eine Lichtquelle (16),
- einen Detektor (30),
- eine Auswerteeinheit (40), die über eine Verbindungsleitung (35) mit dem Detektor (30) verbunden ist,
- eine Anzeigeeinheit (17) und
- ein Filterelement (50) nach den Ansprüchen 1 bis 9,
**dadurch gekennzeichnet,**
**dass** das Filterelement (50) derart ausgebildet ist,
**dass** es einen kurzwelligen Anteil (32b) des Lichtes aus der Lichtquelle (16) nach dem Durchgang durch das Filterelement (50) im kurzwellig transparenten Bereich und einen langwelligen Anteil (33b) des Lichtes aus der Lichtquelle (16) nach dem Durchgang durch das Filterelement (50) im langwellig transparenten Bereich durchlässt sowie
**dass** es einen langwelligen Anteil (31b) des Lichtes der Lichtquelle (16) nach dem Auftreffen auf das Filterelement (50) im kurzwellig transparenten Bereich und einen kurzwelligen Anteil (34b) des Lichtes der Lichtquelle (16) nach dem Auftreffen auf das Filterelement (50) im langwellig transparenten Bereich reflektiert.

11. Spektroskopische/spektrometrische Einrichtung nach Anspruch 10,
**dadurch gekennzeichnet,**
**dass** sie als Detektor (30) einen photoelektrischen Reihen-/Matrix-Umwandler auf der Basis von CCD, CMOS, Photodiode oder Multiplier besitzt.

## Claims

1. An optical filter element (50) for devices (70) for converting spectral information into location information with a connected detector (30) for detecting signals, wherein light incident on the entire surface of the filter element (50) is separated into its individual spectral components over the spatial extent of the filter element (50) after passing through the filter element (50),
at least comprising two microresonators (10, 11),
wherein both microresonators (10; 11) at least feature
- at least two surface-covering reflective layer structures (4, 6; 8, 9) containing at least one material layer (2) with a high refractive index and at least one material layer (3) with a low refractive index in an alternating sequence, as well as
- at least one surface-covering resonance layer (5; 7) arranged between said two respective surface-covering reflective layer structures (4, 6; 8, 9),
**characterized in that**
the filter element (50) comprises at least
a transparent, plane-parallel substrate (1) for optically decoupling the two microresonators (10, 11),
wherein the first microresonator (10; 11) is located on a first of the two opposite surfaces (51; 52) of the substrate (1),
wherein the second microresonator (11; 10) is located on the substrate (1) on a second surface (54) thereof, which lies opposite of the first surface (51), and
wherein the resonance layer (5; 7) and/or the respective reflective layer structure (4, 6; 8, 9) surrounding the resonance layer (5; 7) have a variable layer thickness along the horizontal axis (25) of the filter element (50).

2. The optical filter element according to claim 1,
**characterized in that**
at least one section of the reflective layer structure (4, 6; 8, 9) and/or at least one resonance layer (5; 7) consists of a dielectric material.

3. The optical filter element according to claim 1,
**characterized in that**
at least one of the reflective layer structures (4, 6; 8, 9) consists of a layer stack comprising optically transparent materials with a high refractive index and a low refractive index in an alternating sequence.

4. The optical filter element according to any of the claims 1 to 3,
**characterized in that**
at least one resonant mode of the microresonators (10, 11) has a transmittance greater than 10%, preferably greater than 50%, particularly greater than 90%.

5. The optical filter element according to any of the claims 1 to 4,
**characterized in that**
the geometric setup and/or the material composition of both microresonators (10, 11) are symmetrical in relation to the substrate plane.

6. The optical filter element according to claim 1,
**characterized in that**
the first resonance layer (5) of the first microresonator (10) consists of a different dielectric material than the second resonance layer (7) of the second microresonator (11) such that the resonant modes respectively have a dispersion parabola with differing curvatures.

7. The optical filter element according to claim 1,
**characterized in that**
the dimension of the surface (51, 52) of the substrate (1) perpendicular to the direction of the layer thickness gradient is smaller than in the direction of the layer thickness gradient.

8. The optical filter element according to claim 1,
**characterized in that**
absorptive wall elements (18, 19) which are elongated in the direction of irradiation, are arranged on the sides (53, 54) of the filter element (5).

9. The optical filter element according to claim 1,
**characterized in that**
a locally variable optical filter element (26), in which a spectral preselection of the incident signal (20) is carried out by means of absorptive, transmissive or reflective band-pass filters, is arranged upstream of one of the microresonators (10, 11).

10. A spectroscopic/spectrometric device (70) for converting spectral information into location information, comprising at least
- a light source (16),
- a detector (30),
- an evaluation unit (40) that is connected to the detector (30) via a connecting line (35),
- a display unit (17) and
- a filter element (50) according to any of the claims 1 to 9,
**characterized in that**
the filter element (50) is designed in such a way that
it transmits a short-wave component (32b) of the light from the light source (16) in the region transparent for short waves after the light passes through the filter element (50) and a long-wave component (33b) of the light from the light source (16) in the region transparent for long waves after the light passes through the filter element (50), and that it reflects a long-wave component (31b) of the light from the light source (16) in the region transparent for short waves after the light is incident on the filter element (50) and a short-wave component (34b) of the light from the light source (16) in the region transparent for long waves after the light is incident on the filter element (50).

11. The spectroscopic/spectrometric device according to claim 10,
**characterized in that**
it features a detector (30) in the form of a photoelectric series/matrix converter that is based on a CCD, CMOS, a photodiode or a multiplier.

## Revendications

1. Élément de filtrage optique (50) pour des dispositifs (70) destinés à convertir des informations spectrales en informations de position, doté d'un détecteur connecté (30) destiné à détecter des signaux, la lumière qui atteint l'élément de filtrage (50) sur toute sa surface étant séparée en composantes spectrales individuelles après le passage à travers l'élément de filtrage (50) sur son étendue spatiale,
comprenant au moins deux micro-résonateurs (10, 11),
les deux micro-résonateurs (10 ; 11) présentant
- au moins deux structures de couche réfléchissantes recouvrant la surface (4, 6 ; 8, 9), lesquelles sont constituées d'au moins une couche de matériau (2) à indice de réfraction élevé et d'au moins une couche de matériau (3) à faible indice de réfraction dans une séquence alternée, et
- au moins une couche de résonance recouvrant la surface (5 ; 7) qui est disposée respectivement entre les deux structures de couche réfléchissantes recouvrant la surface (4, 6 ; 8, 9)
**caractérisé**
**en ce que** l'élément de filtrage (50) comprend au moins
un substrat transparent à plan parallèle (1) destiné à découpler optiquement les deux micro-résonateurs (10, 11),
le premier micro-résonateur (10 ; 11) se trouvant sur une première des deux surfaces opposées (51 ; 52) du substrat (1), le second micro-résonateur (11 ; 10) se trouvant sur le substrat (1) sur une seconde surface (54) du substrat (1) qui est opposée à la première surface (51), et
la couche de résonance (5 ; 7) et/ou la structure de couche réfléchissante (4, 6 ; 8, 9) qui entoure la couche de résonance (5 ; 7) ayant une épaisseur de couche variable le long d'un axe horizontal (25) de l'élément de filtrage (50).

2. Élément de filtrage optique selon la revendication 1,
**caractérisé**
**en ce qu'**au moins une partie de la structure de couche réfléchissante (4, 6 ; 8, 9) et/ou au moins une couche de résonance (5 ; 7) sont constituées d'un matériau diélectrique.

3. Élément de filtrage optique selon la revendication 1,
**caractérisé**
**en ce qu'**au moins l'une des structures de couche réfléchissantes (4, 6 ; 8, 9) est constituée d'un empilement de couches de matériaux optiquement transparents à réfraction élevée et à faible réfraction en alternance.

4. Élément de filtrage optique selon les revendications 1 à 3,
**caractérisé**
**en ce qu'**au moins un mode résonant des micro-résonateurs (10, 11) présente une transmittance supérieure à 10 %, de préférence supérieure à 50 %, de manière particulièrement préférée supérieure à 90 %.

5. Élément de filtrage optique selon les revendications 1 à 4,
**caractérisé**
**en ce que** la structure géométrique et/ou la composition matérielle des deux micro-résonateurs (10, 11) sont symétriques au plan du substrat.

6. Élément de filtrage optique selon la revendication 1,
**caractérisé**
**en ce que** la première couche de résonance (5) du premier micro-résonateur (10) est constituée d'un matériau diélectrique différent de celui de la seconde couche de résonance (7) du second micro-résonateur (11), et ainsi les modes résonants présentent une parabole de dispersion ayant des courbes différentes les unes des autres.

7. Élément de filtrage optique selon la revendication 1,
**caractérisé**
**en ce que** l'étendue de la surface (51, 52) du substrat (1) est plus petite perpendiculairement à la direction de gradient d'épaisseur de couche que dans la direction de gradient d'épaisseur de couche.

8. Élément de filtrage optique selon la revendication 1,
**caractérisé**
**en ce que** des éléments de paroi absorbants (18, 19) allongés dans la direction d'incidence sont fixés sur les côtés (53, 54) de l'élément de filtrage (5).

9. Élément de filtrage optique selon la revendication 1,
**caractérisé**
**en ce qu'**une partie filtrante optique localement variable (26) est fixée devant le micro-résonateur (10, 11) dans lequel une présélection spectrale d'un signal entrant (20) est effectuée par des bandes passantes à effet absorbant, transmissif ou réfléchissant.

10. Dispositif spectroscopique/spectrométrique (70) destiné à convertir des informations spectrales en informations de position, comprenant au moins
- une source de lumière (16),
- un détecteur (30),
- une unité d'évaluation (40) qui est connectée au détecteur (30) par l'intermédiaire d'une ligne de connexion (35),
- une unité d'affichage (17), et
- un élément de filtrage (50) selon les revendications 1 à 9,
**caractérisé**
**en ce que** l'élément de filtrage (50) est conçu de manière à laisser passer une fraction à ondes courtes (32b) de la lumière provenant de la source de lumière (16) après son passage à travers l'élément de filtrage (50) dans la zone transparente à ondes courtes, et une fraction à ondes longues (33b) de la lumière provenant de la source de lumière (16) après son passage à travers l'élément de filtrage (50) dans la zone transparente à ondes longues, et en ce qu'il réfléchit une fraction à ondes longues (31b) de la lumière provenant de la source de lumière (16) après qu'elle a atteint l'élément de filtrage (50) dans la zone transparente à ondes courtes, et une fraction à ondes courtes (34b) de la lumière provenant de la source de lumière (16) après qu'elle a atteint l'élément de filtrage (50) dans la zone transparente à ondes longues.

11. Dispositif spectroscopique/spectrométrique selon la revendication 10,
**caractérisé**
**en ce qu'**il comporte, en tant que détecteur (30), un convertisseur photoélectrique de série/à matrice à base de CCD, CMOS, photodiode ou multiplicateur.
